# EUROPEAN PATENT APPLICATION

(11) **EP 3 035 138 A1**
(43) Date of publication of application: **22.06.2016**
(21) Application number: 14199159.6
(22) Date of filing: 19.12.2014
(51) Int. Cl.: G05B 19/05

(54) **Valve controller, configuration method therefor and valve arrangement**

(71) Applicant: Alfa Laval Corporate AB, 221 00 Lund (SE)
(72) Inventor: Henriksen, Axel, DK-5200 ODENSE V (DK); Priisholm, Thomas, DK-6000 KOLDING (DK); Madsen, Karsten Schack, DK-5000 ODENSE (DK)
(74) Representative: Alfa Laval Attorneys

(57) **Abstract**

A valve arrangement (1) defines a fluid inlet (7) and a fluid outlet (8), and comprises a valve controller (2) for controlling a fluid flow between the fluid inlet (7) and the fluid outlet (8). The valve controller (2) comprises control electronics and is configured to operate as an AS-interface slave when connected, by a cable (40), to an AS-interface system. A manipulation unit (38) is permanently affixed onto a housing (28) of the valve controller (2) to enable manual entry of a setting of a control parameter for an AS-interface chip (37), which is located in the housing (28) to handle data communication between the valve controller (2) and the AS-interface system. A data processor (35) is connected to the manipulation unit (38) so as to identify the setting and transmit one or more dedicated control commands to the AS-interface chip (37) in correspondence with the setting.

## Description

### Technical Field

The present invention generally relates to fluid valves and their deployment in industrial environments, and in particular to techniques for facilitating installation and management of fluid valves.

### Background

There are many different types of fluid valves that are deployed in various industrial applications. Such fluid valves include seat valves of both single-seat type and double-seat type, as well as membrane valves, butterfly valves etc. The fluid valves may be designed as on-off valves, changeover valves, mixing valves, pressure regulating valves, control valves, sampling valves, etc.

In industrial applications, fluid valves are arranged to influence and control a process in a targeted manner, e.g. in a process plant. The process plant may thus involve a large number of fluid valves, and each fluid valve may need to be precisely controlled to perform a specific task at a specific time. It may also be vital to identify faulty fluid valves in a timely manner. These objectives require some form of process control.

For process control, it is common to electrically connect the fluid valves into a control network, in which a main controller operates to control the operation of the fluid valves, possibly based on data retrieved from the fluid valves as well as from other components such as sensors included in the control network. Many control networks involve complex wiring for connecting the fluid valves to the main controller To reduce the demand on the main controller and alleviate the need for complex hard wiring, it is known to provide each fluid valve with a valve controller which is connected to the fluid valve so as to control its operation based on commands or control signals from the main controller. Thus, the valve controller includes least some form of intelligence, by it being operable to recognize and act on the control signals.

There are several commercially available networking solutions that may be used for interconnecting fluid valves in a control network, including Modbus, DeviceNet, Profibus, Fieldbus etc. However, most of these networking solutions are overly complex for this purpose. Since fluid valves may be controlled using a relatively small payload of data transmission, it is more common to use Actuator-Sensor Interface (AS-interface) which is an industrial networking solution designed for connecting simple field devices. AS-interface uses a two-pole cable to which the valve controllers are connected, by a dedicated cable connector on the respective valve controller. The valve controllers act as slaves in the network and are identified by a respective slave address. The main controller is connected to a master gateway which is connected to the cable so as to act as a network master and may, in turn, be connected to a higher level network of any kind. As a network master, the main controller controls the network slaves by transmitting so-called master calls, which each includes a command and a slave address. The network slaves intercepts the master calls, and the network slave that has the corresponding slave address executes the command.

While the AS-interface solution reduces the amount of wiring and offers a simple way of physically connecting the fluid valves into a control network, it requires the control network to be re-configured whenever a new valve controller is connected to the network. For example, a new valve controller may need to be installed when a fluid valve is replaced during maintenance or if an additional fluid valve is added to the control network. Such a conventional (re)configuration procedure involves downloading settings to the valve controller via its dedicated cable connector. This is a relatively complex process that requires trained staff and specialized equipment for accessing the valve controller. Of course, a correspondingly complex configuration procedure needs to be undertaken when the control network is first set up.

### Summary

It is an objective of the invention to at least partly overcome one or more limitations of the prior art.

Another objective is to facilitate the procedure of setting up a control network involving a plurality of valve controllers.

Yet another objective is to facilitate the setup procedure without increasing the cost for the control network.

One or more of these objectives, as well as further objectives that may appear from the description below, are at least partly achieved by a valve controller, a method of configuring a valve controller, and a valve arrangement according to the independent claims, embodiments thereof being defined by the dependent claims.

A first aspect is a valve controller configured to operate as an AS-interface slave when the valve controller is connected to an AS-interface system, said valve controller comprising: an AS-interface chip configured to handle data communication between the valve controller and the AS-interface system; a data processor connected to the AS-interface chip; and a housing defining an exterior of the valve controller and enclosing at least the AS-interface chip and the data processor. The valve controller further comprises a manipulation unit which is permanently affixed on the housing and which enables manual entry of a setting of a control parameter for the AS-interface chip, wherein the data processor is connected to the manipulation unit so as to identify the setting and transmit one or more dedicated control commands to the AS-interface chip in correspondence with the setting.

The first aspect facilitates the procedure of setting up the AS-interface system by allowing an operator to manually enter a setting via the manipulation unit, which causes the data processor to "download" the setting into the AS-interface chip inside the valve controller. The one or more dedicated control commands, which are transmitted by the data processor to the AS-interface chip, may be identical to control commands that the AS-interface chip would receive from the AS-interface system in a conventional configuration procedure. The one or more dedicated control commands may cause the AS-interface chip to store an updated value of the control parameter in an electronic memory. The updated value is then used by the AC-interface chip during its operation.

The provision of the manipulation unit serves to reduce or even obviate the need for specialized equipment and trained staff when setting up the AS-interface system, be it during a first set up of the AS-interface system or during maintenance and repair. Provided that the entered setting is visible on the manipulation unit, e.g. if the manipulation unit comprises one or more manual switches, it is also possible for the operator to visually inspect a particular valve controller to verify that a particular control parameter has been modified and determine its current setting.

In one embodiment, the manipulation unit comprises at least one manual switch which is switchable between at least two different states that represent a respective value of at least part of the control parameter. This provides a simple, robust and cost-effective implementation of the manipulation unit.

In one embodiment, the one or more dedicated control commands are transmitted to the AS-interface chip for configuration of data communication between the valve controller and the AS-interface system. Thereby, the operator is given a simple way of setting up the valve controller for communication in the AS-interface system.

In one embodiment, the control parameter is included in the group comprising: a data protocol version for data communication between the valve controller and the AS-interface system, and an address for identifying the valve controller in the AS-interface system. The data protocol of the AS-interface standard has evolved over time, and all versions of the data protocol are not forward or backward compatible. Therefore, the AS-interface chip is often manufactured to support not only the most recent version of the data protocol but also one or more earlier versions. By allowing the operator to manually and tangibly select a specific data protocol version to be active in the respective valve controller, the utility of the valve controller is expanded since it can be re-configured in a simple manner for operation in different AS-interface systems. As explained above, the slave address of the valve controller in the AS-interface system needs to be stored in the valve controller for access by the AS-interface chip when intercepting master-calls. This slave address is assigned to the valve controller when a valve controller is to be installed in the AS-interface system. The set-up procedure when adding a valve controller to the AS-interface system is greatly facilitated since the operator is given the intuitive and simple approach of manually entering the address via the manipulation unit on the valve controller.

In one embodiment, the control parameter is an address for identifying the valve controller in the AS-interface system and the manipulation unit comprises a plurality of manual two-state switches, the data processor being configured to associate each two-state switch with a respective discrete bit among a plurality of bits that define at least part of the address in binary format, a binary value of the respective discrete bit being given by the state of the two-state switch. This provides a simple, robust and cost-effective implementation for entry of the address.

In one embodiment, the control parameter is an address for identifying the valve controller in the AS-interface system and the manipulation unit comprises a manual rotary switch with a plurality of distinct states, the data processor being configured to associate each state with at least a numerical part of a respective address in the AS-interface system. Here, "a numerical part" infers that the address is at least partly given by a combination of numerals, typically digits. Thus, the states of the rotary switch corresponds to a respective combination of numerals. This implementation facilitates the entry of the address, compared to the use of an address defined by a plurality of individual two-state switches. Furthermore, the manipulation unit may be made intuitive to the operator by providing visual markers next to the rotary switch to associate different rotary positions of the rotary switch with different addresses, or at least different numerical parts of such different addresses.

In one embodiment, the control parameter is an address for identifying the valve controller in the AS-interface system, and the data processor is configured to associate a state of a manual switch included in the manipulation unit with an instruction that selectively allows the data processor to transmit the address to the AS-interface chip by the one or more dedicated control commands. This embodiment requires the operator to actively confirm a change of address by manipulating a specific switch on the manipulation unit. Such a safety feature may significantly reduce the risk that the data processor transmits the dedicated control commands to the AS-interface chip as a result of an inadvertent or accidental entry of an address via the manipulation unit.

In one embodiment, the manipulation unit comprises a plurality of manual switches, and the valve controller further comprises a multiplexer which is connected to the manual switches by a respective input line and to the data processor by an output line, the data processor being operable to control the multiplexer to individually and sequentially connect the respective input line to the output line, retrieve a sequence of state data indicating a state for each of the manual switches, and identify the setting based on the sequence of state data. This embodiment reduces the number of channels that are required on the data processor for it to be connected to the manipulation unit. Consequently, the provision of the multiplexer may generally increase the number of available data processors that may be installed in the valve controller, and may also improve the cost-effectiveness of the valve controller since multiplexers are cheap and standard components.

In one embodiment, the manipulation unit comprises a dip switch. Such a manipulation unit is available as a standard component and is cheap and robust.

In one embodiment, the data processor is configured to only transmit the one or more dedicated control commands to the AS-interface chip as part of an initial start-up procedure of the valve controller. This embodiment provides a safety feature, in that settings entered via the manipulation unit does not take effect until the valve controller is restarted. By requiring a restart, the operator is given control of when the entered settings are transferred to the AS-interface chip.

In one embodiment, the AS-interface chip comprises a first interface for data communication with the AS-interface system, a second interface for electric data communication, and a third interface adapted for connection to an optical data receiver, wherein the data processor is electrically connected to the AS-interface chip so as to transmit the one or more dedicated control commands via the third interface. The data processor effectively emulates the output signal of an optical data receiver so as to transmit the dedicated control command(s) to the AS-interface chip. The third interface offers a backdoor to the AS-interface chip and enables the use of an AS-interface chip that lacks an interface specifically configured for connection to a data processor to receive the dedicated control commands that correspond to the settings entered via the manipulation unit. In one implementation, the AS-interface chip is an ZMDI ASIU4 chip, and the third interface comprises an IRD pin on the ZMDI ASIU4 chip.

A second aspect is a method for configuring a valve controller for operation as an AS-interface slave in an AS-interface system. The method is performed by a data processor in the valve controller and comprises: detecting a current state of a manipulation unit which is permanently affixed on the valve controller to enable manual entry of a setting of a control parameter for an AS-interface chip, which is included in the valve controller and configured to handle data communication with the AS-interface system; identifying the setting based on a current state of the manipulation unit; and transmitting one or more dedicated control commands to the AS-interface chip in correspondence with the setting.

In one embodiment, the method further comprises: transmitting a first electric signal to an optical communication interface on the AS-interface chip, the first electric signal comprising a dedicated data sequence causing the AS-interface chip to activate the optical communication interface, whereupon the one or more dedicated control commands are transmitted to the optical communication interface as a second electric signal. In the context of the aforesaid ZMDI AS14 chip, the dedicated data sequence may correspond to a so-called "Magic Sequence".

In one embodiment, at least the step of transmitting the one or more dedicated control commands is only performed during a initial start-up procedure of the valve controller.

A third aspect is a valve arrangement comprising the valve controller of the first aspect. The valve arrangement further comprises: a valve housing; a fluid inlet on the valve housing; a fluid outlet on the valve housing; a valve seat in the valve housing intermediate the fluid inlet and the fluid outlet; a movable closing element for sealing engagement with the valve seat; and an actuator connected to the closing element and being directly or indirectly controlled by the valve controller to move the closing element in relation to the valve seat so as to control a fluid flow through the valve housing between the fluid inlet and the fluid outlet.

A fourth aspect is a computer-readable medium comprising instructions for causing a data processor to perform the method of the second aspect and its embodiments.

Any one of the above-identified embodiments of the first aspect may be adapted and implemented as an embodiment of the second to fourth aspects to attain the corresponding advantages and effects.

Still other objectives, features, aspects and advantages of the invention will appear from the following detailed description, from the attached claims as well as from the drawings.

### Drawings

Embodiments of the invention will now be described in more detail, by way of example, with reference to the accompanying schematic drawings.
Fig. 1 is a section view of a valve arrangement that includes a valve controller, an actuator and a valve, in a closed state.
Fig. 2 is a section view of the valve arrangement in Fig.1 in an open state.
Fig. 3 is a perspective view of the valve controller of Fig. 1.
Fig. 4 is a section view of the valve controller of Fig. 1 taken along line B-B.
Fig. 5 is a schematic overview of a valve arrangement in which the valve controller is connected to an AS-interface system, where dashed lines indicate internal components.
Fig. 6 is a connection diagram of an AS-interface system including valve controllers acting as AS-interface slaves.
Fig. 7 is a top plan view of an AS-interface chip.
Fig. 8A is a block diagram of a manual configuration system in the valve controller of Figs 3-4, and Fig. 8B is a detailed top plan view of a switch panel in the manual configuration system of Fig. 8A.
Fig. 9 is a flow chart of a configuration method performed by the valve controller as part of a power-up sequence.
Figs 10A-10D are top plan views of alternative configurations of the switch panel in the manual configuration system of Fig. 8A.

### Detailed Description

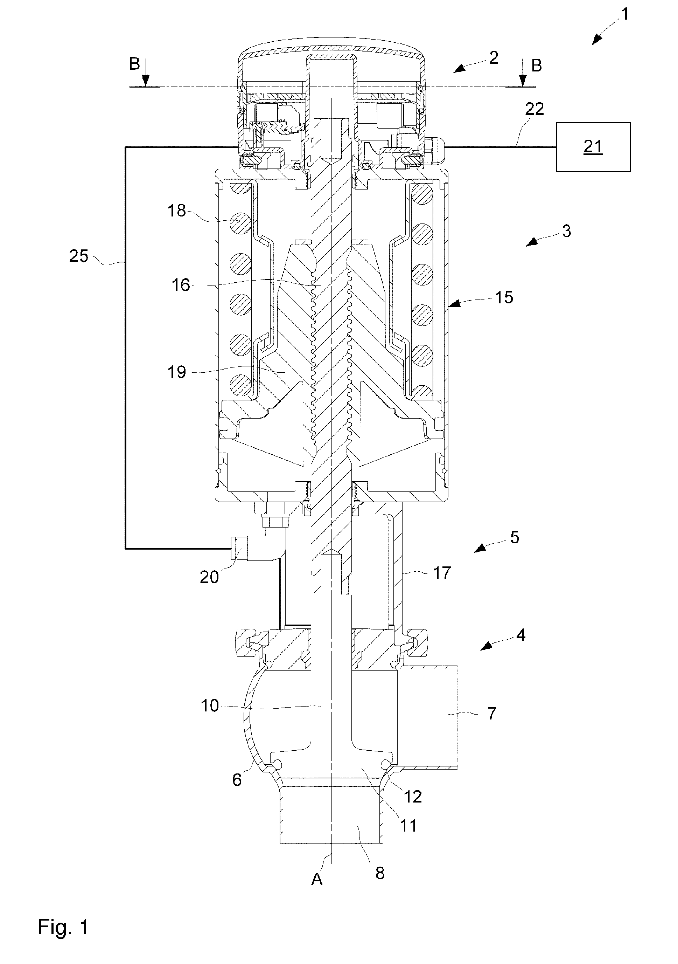

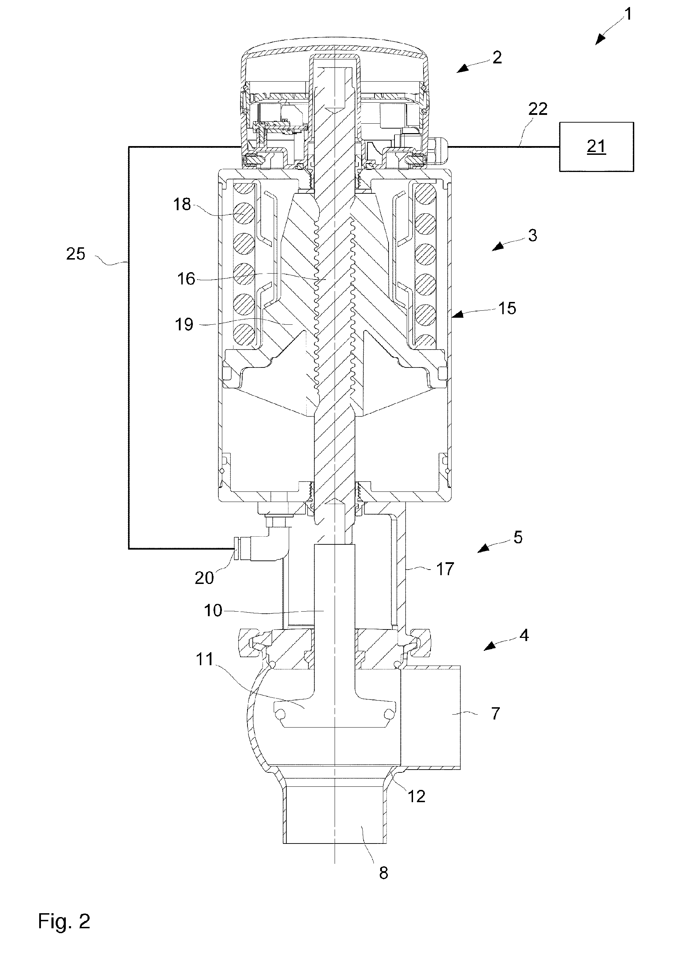

With reference to Figs 1 and 2, a valve arrangement 1 is illustrated. The valve arrangement 1 comprises a control unit or valve controller 2, an actuator 3, and a valve 4 in form of a seat valve. For brevity of presentation, all details of the valve arrangement 1 will not be described, but emphasis will be given to describing the overall structure and function of the valve arrangement 1.

In the illustrated embodiment, the actuator 3 is an air operated actuator. The valve controller 2 is attached at an upper portion of the actuator 3. The valve 4 is attached to a lower portion of the actuator 3 via a connection element 5.

The valve 4 is a conventional seat valve and comprises a valve housing 6 that defines an inlet opening 7 and an outlet opening 8. Further, the valve housing 6 defines a passage for a valve stem 10 that extends into the valve housing 6. The valve stem 10 has at a lower portion a valve disc 11 and is movable in a direction towards and from a valve seat 12 along a direction that is parallel to a geometrical center axis A of the valve stem 10. When the valve disc 11 abuts the valve seat 12, i.e. when the valve disc 11 is brought into engagement with the valve seat 12, the valve 4 is closed (see Fig. 1). When the valve stem 10 moves in a direction away from the valve seat 12, the valve 4 is opened such that a fluid may flow from the inlet opening 7 to the outlet opening 8 (see Fig. 2). Thus, the valve seat 12 is arranged such that a fluid may flow from the inlet opening 7, past the valve seat 12 and to the outlet opening 8, which is a common arrangement for seat valves.

The actuator 3 comprises a cylindrical actuator housing 15. An actuator rod 16 extends through openings in the top and bottom portions of the actuator housing 15. The actuator rod 16 is movable back and forth in a direction parallel to the geometrical center axis A of the valve stem 10. The actuator 3 has a connection element 5 to which the valve 4 in a conventional manner is connected, in the illustrated example by a connection ring. The connection element 5 comprises a cylindrical, hollow body 17 that surrounds an upper part of the valve stem 10 that protrudes from the valve 4. The hollow body 17 also surrounds a lower portion of the actuator rod 16 that protrudes from the actuator 3. The upper portion of the valve stem 10 is connected to the lower portion of the actuator rod 16. In the illustrated example, the actuator rod 16 and the valve stem 10 share the same geometrical center axis A and are movable in unison in a direction back and forth along the axis A. Thus, when the actuator rod 16 is moved in a direction towards or away from the valve seat 12, the valve disk 11 is moved towards or away from the valve seat 12 as well.

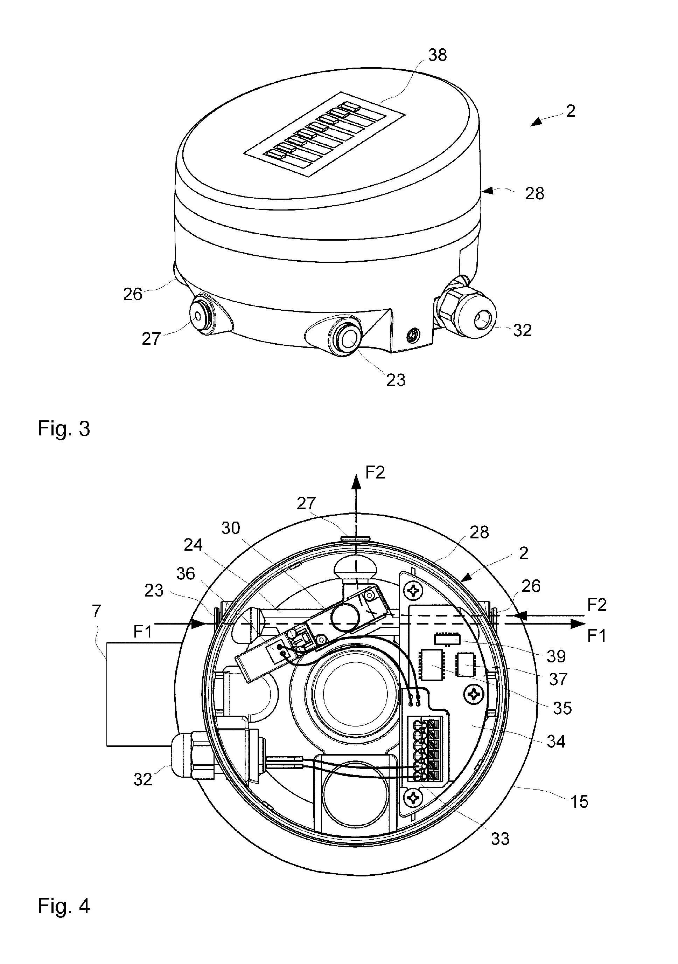

Inside the actuator housing 15, a pre-compressed spring 18 is arranged with one spring end acting on the actuator housing 15 and the opposite spring end acting on a cylinder (piston) 19 which is attached to the actuator rod 16. The force exerted by the spring 18 thereby moves the cylinder 19 to a lowermost position, in which the valve disc 11 abuts the valve seat 12 and thus the valve 8 is normally closed. An inlet connection 20 is attached to the lower portion of the actuator housing 15 to define an actuator inlet for a control fluid (typically air). The control fluid is supplied by a source 21 along a fluid path that extends through the valve controller 2 to the inlet connection 20. The fluid path is formed by a supply line 22, which extends between the source 21 and a fluid inlet (23 in Fig. 3) on the valve controller 2, a flow channel (24 in Fig. 3) through the valve controller 2, and a fluid transfer line 25, which extends between a fluid outlet (26 in Fig. 3) on the valve controller 2 and the inlet connection 20.

The valve controller 2 is operable to selectively open and close the fluid path between the source 21 and the inlet connection 20. When the valve controller 2 opens the fluid path, the control fluid enters the actuator housing 15 and exerts a force on the cylinder 19 sufficient to overcome the force exerted by the spring 18, thereby opening the valve 8 by driving the cylinder 19, and hence also the valve disc 11, in an upward direction. When the valve controller 2 closes the fluid path, and concurrently expels control fluid from the actuator housing 15 through a vent opening (27 in Fig. 3) on the valve controller 2, the force exerted by the spring 19 eventually overcomes the force exerted by the control fluid on the cylinder 19, which closes the valve 8.

The valve controller 2 is illustrated in greater detail in Figs 3 and 4. The valve controller 2 comprises a housing or casing 28 that defines the fluid inlet 23, the fluid outlet 26 and the vent opening 27. As seen in the section view of Fig. 4, the flow channel 24 extends inside the casing 28 between the fluid inlet 23 and the fluid outlet 26 and is connected to the vent opening 27 by a branched channel. A control valve 30 is arranged in the flow channel 24 and is operable between two states. In a first state, the control valve 30 provides fluid communication F1 from the fluid inlet 23 to the fluid outlet 26, while blocking fluid communication through the vent opening 27. In a second state, the control valve 30 provides fluid communication F2 from the fluid outlet 26 to the vent opening 27, while blocking fluid communication through the fluid inlet 23. Any conventional valve technique may be used for providing the fluid communications F1 and F2. The control valve 30 may, for example, be a solenoid valve.

As will be described in more detail below, the valve controller 2 is configured to operate as an AS-interface slave in an AS-interface system. The valve controller 2 comprises an external connector 32 for connecting the valve controller 2 to the AS-interface system. According to the AS-interface standard, AS-interface slaves are connected to the AS-interface system by a cable with a pair of wires that convey both data and power to the AS-interface slaves. In Fig. 4, the external connector 32 is implemented as a cable gland which is connected by wires to an IC socket 33 on a printed circuit board, PCB 34. It should be understood that the external interface 32 may have any known configuration for connection to a conventional two-wire AS-interface cable or any other suitable cable.

The internal operation of the valve controller 2, e.g. the activation of the control valve 30, is controlled by a microprocessor 35 which is attached to and electrically connected to the PCB 34. In the example of Fig. 4, the microprocessor 35 is electrically connected, by wires extending from the PCB 34, to a socket 36 on the control valve 30. The microprocessor 35 is further arranged to communicate with the AS-interface system via a dedicated AS-interface chip 37, which is electrically connected to the IC socket 33 via the PCB 34.

As seen in Fig. 3, a switch panel 38 is attached to a top surface of the casing 28. The switch panel 38, which will be described in greater detail below, is a manipulation unit that allows an operator to manually enter configuration settings for the valve controller 2. In the illustrated example, the switch panel 38 comprises a number of individual switches which are connected, e.g. by wires (not shown) or wirelessly, to a multiplexer 39 which is attached to the PCB 34 and electrically connected to the microprocessor 35. Alternatively, the switch panel 38 is attached to the PCB 34, in which case to multiplexer is needed.

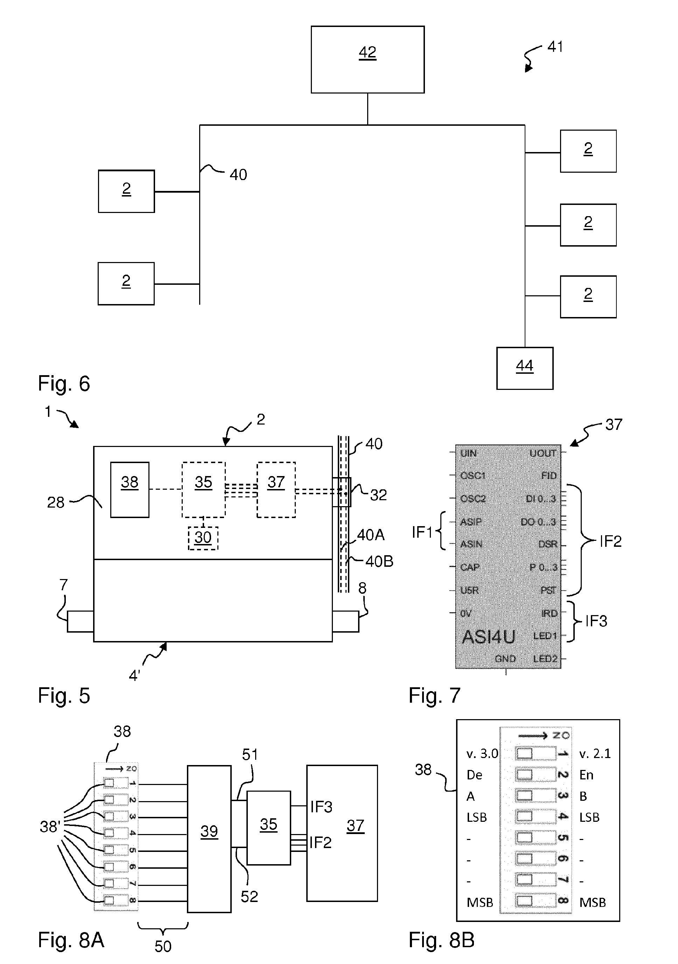

Fig. 5 is a generalized overview of a valve arrangement 1 similar to the one described in relation to Figs 1-4. Dashed lines represent components that are hidden from view. The valve arrangement 1 includes a valve controller 2 and an actuator-valve module, designated by 4' in Fig. 5. The valve controller 2 may either be removably attached to or permanently integrated with the actuator-valve module 4'. The actuator-valve module 4' has a fluid inlet 7 and a fluid outlet 8. Although not shown in Fig. 5, the module 4' comprises a valve seat (cf. valve seat 12 in Figs 1-2) intermediate the fluid inlet 7 and the fluid outlet 8, and a movable closing element (cf. valve disc 11 in Figs 1-2) for sealing engagement with the valve seat. The valve controller 2 comprises a data processor 35, which may be implemented as a microprocessor (cf. Fig. 4), a CPU ("Central Processing Unit"), a DSP ("Digital Signal Processor"), an ASIC ("Application-Specific Integrated Circuit"), discrete analog and/or digital components, or some other programmable logical device, such as an FPGA ("Field Programmable Gate Array"). Although not shown in Fig. 5, the valve controller 2 may further include system memory coupled to or integrated with the data processor 35. The system memory may include one or more computer storage media in the form of volatile and/or non-volatile memory such as read only memory (ROM), random access memory (RAM) and flash memory. Special-purpose software comprising machine-readable instructions for execution by the data processor 35 may be stored in the system memory, or on another removable/non-removable volatile/non-volatile computer storage medium which is included in or accessible to the valve controller 2.

The data processor 35 is connected to control the operation of a force generator 30 for setting the valve state of the module 4', e.g. by moving the closing element away from the valve seat (open state) or into engagement with the valve seat (closed state). In analogy with the example of Figs 1-4, the force generator 30 may be implemented by a control valve which sets the valve state by directing pneumatic pressure to and from the module 4'. In alternative implementations, the force generator 30 may be configured to set the valve state by directing hydraulic pressure to and from the module 4', or by electrically or electromagnetically controlling the movement of the closing element, as in well-known in the art. The force generator 30 may alternatively be arranged in the module 4'.

In Fig. 5, the valve controller 2 is electrically connected by the external connector 32 to a pair of wires 40A, 40B included in an AS-interface cable 40, also known as a field bus, which is part of an AS-interface system. The data processor 35 communicates with the AS-interface system via the AS-interface chip 37, which thus provides an interface to the AS-interface system. The chip 37 implements power supply, physical data transfer and communication protocol handling. Configuration data for the chip 37 is typically stored in an internal memory (not shown) of the chip 37, although it is possible to implement the chip 37 to store and retrieve the configuration data from the above-mentioned system memory. The valve controller 2 is operable to interpret input data, which is received from the AS-interface system via the chip 37, as operation instructions. Such operation instructions may e.g. involve setting the valve 4 in a specific valve state, e.g. open or closed, to re-start, to power-down or to perform a self-diagnostic test. The valve controller 2 is also operable to transmit, via the chip 37, output data to the AS-interface system. The output data may be a confirmation of the current valve state, a confirmation of executed self-diagnostics, an operational fault indication, etc.

Fig. 6 shows an example of an AS-interface system 41. The system 41 is configured according to the Actuator Sensor Interface (AS-Interface) standard, which defines an industrial networking solution used in automation systems. In the following, AS-interface is abbreviated "AS-i". The AS-i standard is designed for connecting simple field I/O devices, such as valves, sensors, rotary encoders, push buttons, etc, using a two-conductor cable. The AS-i system 41 comprises four main components: one network master 42, a number of network slaves 2, a wiring infrastructure 40 and a power supply 44. The network master 42 may be implemented as a gateway between the AS-i system 41 and a higher level-network (not shown), or may be a dedicated controller for the AS-i system 41 only and may e.g. be a Programmable Logic Controller (PLC) or a Personal Computer (PC). The network slaves 2 are the above-mentioned I/O devices, which are configured to operate as AS-i slaves in the system 41. The network slaves are generally designated by reference numeral 2 in Fig. 6 and may include one or more of the valve controllers as described in the foregoing as part of a respective valve arrangement 1. Each network slave 2 is identified in the AS-i system by a unique address ("slave address"), which is stored in the respective network slave 2. The power supply 44 is connected to the cable 40 to power the network slaves 2 and enable communication with the network master 42. The wiring infrastructure 40 is formed by a dedicated cable which contains two parallel wires (40A, 40B in Fig. 5) that convey both data and power to the network slaves 2. The cable 40 may be arranged in many different topologies, including a tree topology as shown in Fig. 5, as well as line and star topologies.

The underlying communication procedure of the AS-i standard is a master-slave method, by which the network master 42 initiates data exchange with a network slave 2 and requires the network slave 2 to respond within a given maximum time. AS-i data exchanges are based on a master-call, where the data frame consists of a slave address, data packages and framing bits. The respective network slave 2 returns a slave-response. The master-call and slave-response follow a standardized data protocol. This data protocol has evolved over time and exists in a number of different versions. The version applied in an AS-i system 41 is given by the version supported by the network master 42. The network master 42 and the network slaves 2 each include one of the above-mentioned AS-i chips 37, which are configured to handle data communication according to the AS-i standard. The AS-i chips 37 are programmable to operate in either master mode or slave mode, depending on if they are to be installed in a network master 42 or a network slave 2. Many AS-i chips 37 are manufactured and configured to support at least two different versions of the data protocol, so as to be compatible with a larger set of AS-i systems. When an AS-i chip 37 is installed in a device during manufacture, the chip 37 is programmed to activate one of the master and slave modes and one of the data protocol versions.

Below follows a few, non-limiting examples of currently available data protocol versions. In version 2.0, the AS-i protocol supports 31 I/O devices acting as slaves with respect to a single master, by each slave being identified by a unique 8-bit address number in the system. Version 2.0 allows each slave to exchange 4 bits of input and 4 bits of output with the master. In version 2.1, the AS-i protocol supports 62 I/O devices acting as slaves with respect to a single master. The address is given by 8 bits in combination with a further bit that indicates either A or B node. This enables each of the 31 address numbers to be used twice and each slave is identified by the address number in combination with one of the two nodes. The address space thereby includes two sub-spaces: 1A-31A and 1B-32B. Version 2.1 allows each slave to exchange 4 bits of input and 3 bits of output with the master. In Version 3.0, the AS-i protocol uses the same addressing scheme as version 2.1 and supports 62 I/O devices acting as slaves. Compared to the earlier versions, version 3.0 defines new communication profiles for binary and analog data, and introduces a serial transmission profile.

Returning to Fig. 5, the switch panel 38 is installed to be externally accessible on the valve controller 2 and is electrically connected to the data processor 35, which thus is operable to receive a signal indicative of the state of each switch included in the switch panel 38. The data processor 35 is configured to translate the states of the switches into a setting for at least one control parameter of the AS-i chip 37. The control parameter may be any parameter stored and used by the AS-i chip 37, but is preferably a configuration parameter for the data communication between the AS-i chip 37 and the AS-i system 41. In one embodiment, the configuration parameter is the address of the valve controller 2, acting as a slave, in the AS-i system 41. In another embodiment, the configuration parameter indicates the data protocol version to be used by the valve controller 2 when communicating in the AS-i system 41, e.g. when intercepting master-calls from the network master 42.

The switch panel 38 thus provides a simple and convenient way for an operator to manually configure the valve controller 2 for operation in the AS-i system 41. The switch panel 38 also allows the operator to visually inspect the valve controllers 2 in the AS-i system 41 so as verify the current settings of the respective valve controller 2. This a significant technological advance compared to the conventional configuration procedure of accessing the valve controller 2 for entry of the address via a dedicated software program through the network master 42 or by connecting a specialized handheld device to the external connector 32 of respective valve controller 2. The switch panel 38 thereby reduces the need for specially trained staff and the use of specialized equipment and it also adds the flexibility of allowing the operator to change the data protocol version that is activated in the valve controller 2.

Fig. 7 is a detailed view of the AS-interface chip 37 which is installed in the valve controller 2 of Fig. 4. This AS-i chip 37 is an ASI4U chip provided by Zentrum Mikroelektronik Dresden AB (ZMDI) and has an internal EEPROM for storage of all configuration data. The AS-i chip 37 is packaged in a plastic holder with external pins. The assignment of the pins is indicated by acronyms for each pin in Fig. 7. The functionality associated with the pins will not be detailed here, but can be found in a data sheet for the chip, e.g. "ASIU4 / ASI4U-E /ASIU4-F Spec 3.0 Compliant Universal AS-I IC", Rev. 2.2 from April 2012. As indicated in Fig. 7, the AS-i chip 37 may be seen to define at least three communication interfaces, designated by IF1, IF2 and IF3. The mapping of communication interfaces to pins in Fig. 7 is approximate and given for illustration purposes only.

The first interface IF1 is used for receiving data from and transmitting data to the AS-i system 41, via a connection to the cable 40. Thus, in Fig. 4, IF1 of the AS-i chip 37 is connected to the AS-i system via the PCB 34, the IC socket 33, and the wires extending therefrom to the gland 32. IF1 is operable to accept control commands, from the network master 41, including control commands that cause the AS-i chip 37 to adjust the configuration data stored in the EEPROM. The control commands are predefined and encoded in the data package of the master-calls and include DEXG (Data Exchange), WPAR (Write Parameter), ADRA (Address Assignment), DELA (Delete Address), Reset Slave (RES), RDIO (Read 10 Configuration), RDID(Read ID Code), RDST (Read Status) and PRGM (Enter Program Mode).

The second interface IF2 may be used for data communication with the data processor 35. The second interface IF2 does not accept the above-identified control commands but allows the data processor 35 to communicate with the AS-i chip 37. For example, the data processor 35 may supply data to AS-i chip 17 to be included in a slave-response, which is transmitted via IF1, and to retrieve data received by the AS-i chip 37 in a master-call via IF1. The received data may cause the data processor 35 to transmit a control signal to the force generator 30 for setting the valve state.

In an alternative implementation, not shown herein, the force generator 30 may be connected directly to IF2 of the AS-i chip 37 to receive a control signal that causes the force generator 30 to set the valve state accordingly.

The third interface IF3 includes a so-called IRD pin which is configured to be connected to a photo diode so as to enable optical communication with the AS-i chip 37. IF3 is operable to accept the above-identified control commands, including control commands for setting the configuration data in the EEPROM. IF3 is normally disabled in the AS-i chip 37 and may be activated by applying a so-called Magic Sequence at the IRD pin. When activated, the IRD pin is receiving Manchester-II-coded master-calls, while the LED1 pin is returning slave-responses in Manchester-II-format. The Magic Sequence requires the reception of four consecutive correct master-calls (telegrams) in Manchester-II-format within a given time frame.

As shown in Fig 8A, the data processor 35 is connected to IF3 to emulate the output signal of a photo diode so as to be able to access the additional communication channel provided by the IRD pin. Specifically, the signal can thus be either an AC-current signal generated by a photo diode, or the signal may be a 5V CMOS signal. The data processor 35 may automatically detects the type of signal and switches the input path accordingly.

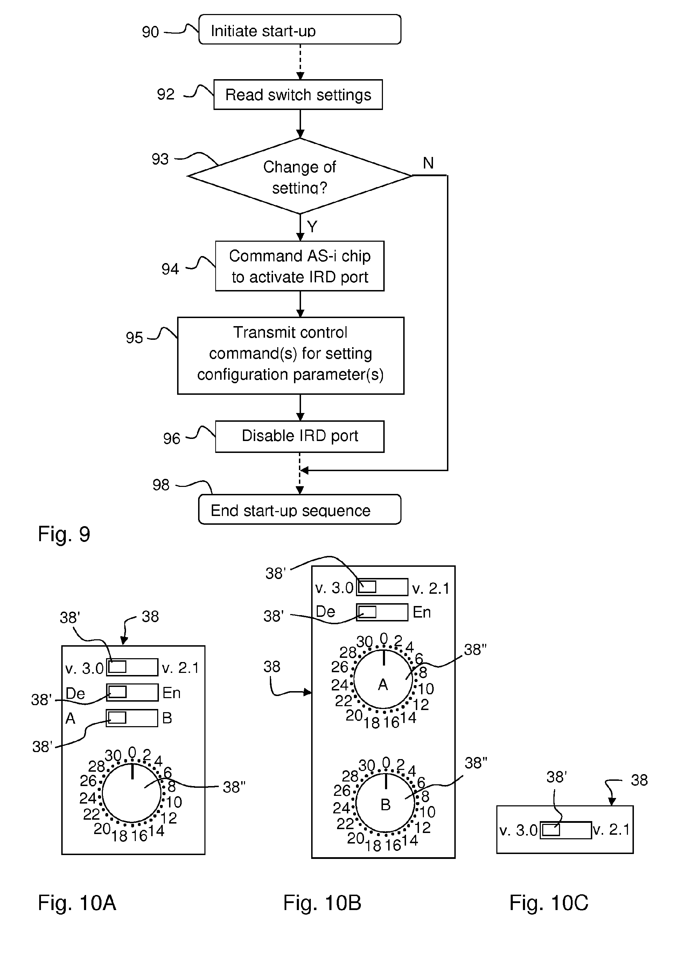

The data processor 35, after interpreting the states of the switches in the switch panel 38 as a configuration setting to be changed in the AS-i chip 37, operates to apply the Magic Sequence to the IRD pin, and then transmits one or more control commands, e.g. as exemplified above, to change the configuration setting in the EEPROM of the AS-i chip 37. In Fig. 8A, the switch panel 38 has eight individual slide switches 38' which have two states (positions) each, corresponding to a logical 0 (left) and a logical 1 (right). Thus, each two-state switch 38' encodes one bit of information. The data processor 35 is connected to the switch panel 38 via a multiplexer 39. The multiplexer 39 has eight input lines 50 connected to a respective switch 38', as well as an output line 51 and a control line 52 connected to the data processor 35. The data processor 35 controls the multiplexer 39, by applying a dedicated control signal on the control line 52, to sequentially connect the input lines 50 to the output line 51, while the data processor 35 reads the state of the respective switch 38' on the output line 51. The provision of the multiplexer 37 may reduce the cost of valve controller 2, especially if the switch panel 38 includes many switches 38', by enabling the use of a data processor 35 with relatively fewer data channels. Alternatively, the switch panel 38 may be directly connected to the data processor 35, by one output line 51 for each switch 38'. Such an embodiment is shown in Fig. 5, in which the switch panel 38 is assumed to have a single two-state switch (cf. Fig. 10C).

It should be understood the installation in Fig. 8A is applicable to all existing and future AS-i chips 37 that have at least one auxiliary addressing channel that may be accessed by a data processor 35 for transmitting one or more dedicated control commands that change the configuration settings of the AS-i chip 37. The auxiliary addressing channel may or may not be intended for optical data communication. Another existing AS-i chip 37 supporting optical data communication is A²SI from ZMDI.

Fig. 8B shows an example of a switch panel 38 for installation on a valve controller 2. Each switch is associated with a respective function by the data processor 35. The top-most switch (number 1) allows the operator to set the data protocol version to be active in the valve controller, in this example either version 3.0 or version 2.1. The following switches (numbers 2-8) allow the operator to set the address of the valve controller in the AS-i system. One of these switches (number 2) can be toggled between a left position, which prevents (disables) an address change via the switch panel 38, and a right position which enables such an address change. This enable/disable switch may be implemented as a safety feature to prevent an inadvertent change of the address of the valve controller 2. The next switch (number 3) allows the operator to select either A node or B node for the address, and the following switches (number 4-8) define the address number in binary format, where left and right positions of the respective switch represent a binary 0 and 1, respectively. The use of a plurality of manual two-state switches provides a rugged and robust switch panel 38 suitable for industrial environments. Such a switch panel 38 may e.g. be implemented by a dip switch.

To further reduce the impact of unintentional changes to the switch panel 38, the data processor 35 is configured to only read the states of the switches 38' as part of a start-up sequence executed by the data processor 35 when the valve controller 2 is powered-up. Thus, any changes to the switches 38' only take effect upon a restart of the valve arrangement 1. The re-start may be initiated by pushing a dedicated button/switch (not shown) on the valve controller 2 or remotely via the network master 42. Fig. 9 is a flow chart for a start-up sequence executed by the data processor 35 in Fig. 8A. In step 90, the start-up sequence is initiated. In step 92, the states of the switches 38' on the switch panel 38 are retrieved. Then, step 93, evaluates if the states of the switches 38' mandate a change to at least one control parameter in the AS-i chip 37. If a change is mandated, the start-up sequence proceeds to step 94 and commands the AS-i chip 37 to activate the IRD pin for receipt of control commands, e.g. by supplying a first electric signal representing the Magic Sequence to the IRD pin. Then, step 95 transmits a second electric signal representing the requisite control commands to the AS-i chip 37 for causing the AS-i chip 37 to change the control parameter(s) accordingly. In step 96, optionally after receiving a confirmation via the LED1 pin, the IRD pin is disabled, e.g. by supplying a third electric signal at one or more appropriate pins on the AS-i chip 37, e.g. within the interfaces IF2 and/or IF3. The start-up sequence then proceeds until it is ended in step 98. If no change is mandated in step 93, the start-up sequence skips steps 94-96. It is realized that the start-up sequence may include additional steps to the ones represented in Fig. 9, as indicated by the dashed arrows before step 92 and after step 96.

Step 93 may decide that a change is mandated whenever the states of the switches 38' have changed compared to the previous (most recent) start-up sequence. In this process, the data processor 35 maps the current states of the switches 38' to state data that indicates the states of the switches 38' during the previous start-up sequence. This state data may be stored in the system memory and may be updated by the data processor 35 during the start-up sequence, e.g. as part of any of steps 94-96. If the switch panel 38 includes the above-mentioned enable/disable switch, step 93 may require this switch to be set in the enable state in order to proceed to steps 94-96 for changing the slave address in the AS-i chip 37, and optionally also for changing the data protocol version.

In an alternative embodiment, step 93 does not consider the previous states of the switches 38', but proceeds to steps 94-96 for setting the slave address in the AS-i chip 37, and optionally also for setting the data protocol version, whenever the enable/disable switch is found to be set in the enable state. Thus, as long as the enable/disable switch is set in the enable state, the data processor 35 will set the slave address, and possibly the data protocol version, in the AS-i chip 37 in accordance with the states of the switches 38".

In yet another embodiment, step 93 is omitted and steps 94-96 are always executed as part of the start-up sequence. The start-up sequence will thus ignore the enable/disable switch, if present on the switch panel 38.

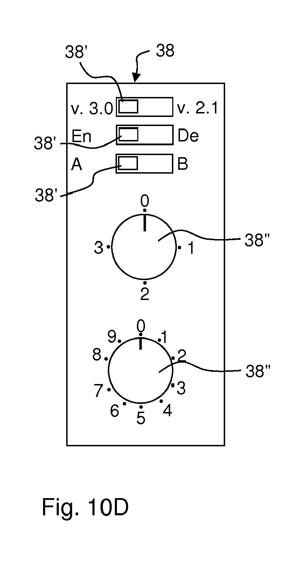

Figs 10A-D illustrate a few alternative implementations of the switch panel 38. Like in Fig. 8B, the switch panel 38 includes slide-switches 38' for setting data protocol version, selecting enable or disable, and selecting A or B node, respectively. The numerical part of the slave address is set by a manual rotary switch 38", which has a number of distinct states given by different rotary positions of the switch 38". Correspondingly, the data processor 35 associates each state with the numerical part of the slave address. This implementation may reduce human error compared to the implementation in Fig. 8A, since it may be more intuitive for the operator to enter a numerical address than a binary address. The rotary switch 38 is preferably configured to be locked in its respective rotary position, e.g. requiring the operator to push or pull the rotary switch 38" to change its rotary position. Fig. 10B is a variant in which the switch panel 38 has two rotary switches 38", one for setting the address sub-space A1-A31 and one for setting the address sub-space B1-B31. Fig 10C is a variant with a single switch 38', in this example for setting the data protocol version. Fig. 10D is another variant in which the switch panel 38 has two rotary switches 38" and three slide-switches 38'.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and the scope of the appended claims.

For example, the switch panel 38 may be configured to allow manual entry of other configuration settings than data protocol version and slave address that may be or become relevant for an operator to set or modify in the field.

Furthermore, the switch panel 38 may allow the operator to select between more than two data protocol versions, e.g. by including more than one two-state switch and/or a multiple state switch, e.g. a rotary switch.

It should also be understood that the switch panel 38 may be implemented with other types of switching elements, including flip switches, push buttons, touch buttons, etc. The switch panel 38 may also be implemented as a touch panel which defines the switches as displayed graphical elements, as in well-known in the art.

The valve arrangement may include any type of valve, including on-off valves (normally closed or normally open), changeover valves, mixing valves, pressure regulating valves, control valves, sampling valves, etc. The valve may be of any design, including a single-seat valve, a double-seat valve, a butterfly valve, a membrane valve, a ball valve, a plug valve, a knife gate valve, etc.

## Claims

1. A valve controller configured to operate as an AS-interface slave when the valve controller is connected to an AS-interface system (41), said valve controller comprising:
an AS-interface chip (37) configured to handle data communication between the valve controller and the AS-interface system (41),
a data processor connected to the AS-interface chip (37), and
a housing (28) defining an exterior of the valve controller and enclosing at least the AS-interface chip (37) and the data processor (35),
said valve controller further comprising a manipulation unit (38) which is permanently affixed on the housing (28) and which enables manual entry of a setting of a control parameter for the AS-interface chip (37),
wherein the data processor (35) is connected to the manipulation unit (38) so as to identify the setting and transmit one or more dedicated control commands to the AS-interface chip (37) in correspondence with the setting.

2. The valve controller of claim 1, wherein the manipulation unit (38) comprises at least one manual switch (38', 38") which is switchable between at least two different states that represent a respective value of at least part of the control parameter.

3. The valve controller of claim 1 or 2, wherein the one or more dedicated control commands are transmitted to the AS-interface chip (37) for configuration of data communication between the valve controller and the AS-interface system (41).

4. The valve controller of any preceding claim, wherein the control parameter is included in the group comprising: a data protocol version for data communication between the valve controller and the AS-interface system (41), and an address for identifying the valve controller in the AS-interface system (41).

5. The valve controller of any preceding claim, wherein the control parameter is an address for identifying the valve controller in the AS-interface system (41), and wherein the manipulation unit (38) comprises a plurality of manual two-state switches (38'), the data processor (35) being configured to associate each two-state switch (38') with a respective discrete bit among a plurality of bits that define at least part of the address in binary format, a binary value of the respective discrete bit being given by the state of the two-state switch (38').

6. The valve controller of any preceding claim, wherein the control parameter is an address for identifying the valve controller in the AS-interface system (41), and wherein the manipulation unit (38) comprises a manual rotary switch (38") with a plurality of distinct states, the data processor (35) being configured to associate each state with at least a numerical part of a respective address in the AS-interface system (41).

7. The valve controller of any preceding claim, wherein the control parameter is an address for identifying the valve controller in the AS-interface system (41), and wherein the data processor (35) is configured to associate a state of a manual switch (38', 38") included in the manipulation unit (38) with an instruction that selectively allows the data processor (35) to transmit the address to the AS-interface chip (37) by the one or more dedicated control commands.

8. The valve controller of any preceding claim, wherein the manipulation unit (38) comprises a plurality of manual switches (38', 38"), and wherein the valve controller further comprises a multiplexer (37) which is connected to the manual switches (38', 38") by a respective input line (50) and to the data processor (35) by an output line (51), the data processor (35) being operable to control the multiplexer (39) to individually and sequentially connect the respective input line (50) to the output line (51), retrieve a sequence of state data indicating a state for each of the manual switches (38', 38"), and identify the setting based on the sequence of state data.

9. The valve controller of any preceding claim, wherein the manipulation unit (38) comprises a dip switch.

10. The valve controller of any preceding claim, wherein the data processor (35) is configured to only transmit the one or more dedicated control commands to the AS-interface chip (37) as part of an initial start-up procedure of the valve controller.

11. The valve controller of any preceding claim, wherein the AS-interface chip (37) comprises a first interface (IF1) for data communication with the AS-interface system (41), a second interface (IF2) for electric data communication, and a third interface (IF3) adapted for connection to an optical data receiver, wherein the data processor (35) is electrically connected to the AS-interface chip (37) so as to transmit the one or more dedicated control commands via the third interface (IF3).

12. The valve controller of claim 11, wherein the AS-interface chip (37) is an ZMDI ASIU4 chip, and the third interface (IF3) comprises an IRD pin on the ZMDI ASIU4 chip.

13. A method for configuring a valve controller (2) for operation as an AS-interface slave in an AS-interface system (41), said method being performed by a data processor (35) in the valve controller (2) and comprising:
detecting a current state of a manipulation unit (38) which is permanently affixed on the valve controller (2) to enable manual entry of a setting of a control parameter for an AS-interface chip (37), which is included in the valve controller (2) and configured to handle data communication with the AS-interface system (41);
identifying the setting based on a current state of the manipulation unit (38); and
transmitting one or more dedicated control commands to the AS-interface chip (37) in correspondence with the setting.

14. The method of claim 13, further comprising: transmitting a first electric signal to an optical communication interface (IF3) on the AS-interface chip (37), the first electric signal comprising a dedicated data sequence causing the AS-interface chip (37) to activate the optical communication interface (IF3), whereupon the one or more dedicated control commands are transmitted to the optical communication interface (IF3) as a second electric signal.

15. The method of claim 13 or 14, wherein at least the step of transmitting the one or more dedicated control commands is only performed during a initial start-up procedure of the valve controller.

16. A valve arrangement comprising the valve controller of any one of claims 1-12, the valve arrangement further comprising:
a valve housing (6),
a fluid inlet (7) on the valve housing (6),
a fluid outlet (8) on the valve housing (6),
a valve seat (12) in the valve housing (6) intermediate the fluid inlet (7) and the fluid outlet (8),
a movable closing element (10, 11) for sealing engagement with the valve seat (12), and
an actuator (3) connected to the closing element (10, 11) and being directly or indirectly controlled by the valve controller (2) to move the closing element (10, 11) in relation to the valve seat (12) so as to control a fluid flow through the valve housing (6) between the fluid inlet (7) and the fluid outlet (8).
